# FASCICULE DE BREVET EUROPEEN

(11) **EP 4 180 093 B1**
(45) Date de publication et mention de la délivrance du brevet: **26.06.2024**
(21) Numéro de dépôt: 22205938.8
(22) Date de dépôt: 07.11.2022
(51) Int. Cl.: A62B 9/04, F16L 37/23

(54) **DISPOSITIF DE COUPLAGE FLUIDIQUE A TEMOIN VISUEL**
FLÜSSIGKEITSKUPPLUNGSVORRICHTUNG MIT VISUELLEM INDIKATOR
FLUID COUPLING DEVICE WITH VISUAL INDICATOR

(30) Priorité: 10.11.2021 FR 2111967
(43) Date de publication de la demande: 17.05.2023
(73) Titulaire: Parker Hannifin EMEA S.à.r.l., 1163 Etoy (CH)
(72) Inventeur: WITT, Stefan, 71735 Eberdingen-Nussdorf (DE); SEIFERT, Jürgen, 76461 Muggensturm (DE)
(74) Mandataire: Cabinet Boettcher

(56) Documents cités:
- US-A- 5 445 358
- US-A1- 2015 247 594
- US-B2- 9 528 650
- US-B2- 10 527 214

## Description

La présente invention concerne le domaine des circuits de transport de fluide et plus particulièrement les dispositifs de couplage fluidique.

### ARRIERE PLAN DE L'INVENTION

Il est connu de raccorder une bouteille d'oxygène à un appareil de respiration au moyen d'un dispositif de couplage comprenant un coupleur mâle destiné à être emmanché dans un coupleur femelle pour assurer le transport d'oxygène sous pression vers l'appareil de respiration. Le coupleur femelle comprend généralement un corps tubulaire pourvu de moyens de retenue agencés pour assujettir de manière étanche le coupleur mâle dans ledit corps. Une bague de manoeuvre est montée mobile axialement sur le corps entre une position de libération dans laquelle les moyens de retenue sont inactifs, et une position de verrouillage dans laquelle les moyens de retenue sont actifs et jusqu'à laquelle la bague de manoeuvre est amenée par un ressort lorsque le coupleur mâle est correctement emmanché dans le corps.

La présence d'une fuite dans le dispositif peut être due à une mauvaise connexion du coupleur mâle dans le coupleur femelle. Il arrive en effet que le coupleur mâle ne soit pas suffisamment emmanché dans le coupleur femelle pour coopérer correctement avec ses moyens de retenue, ce qui peut avoir des conséquences dramatiques, par exemple lors du remplacement d'une bouteille d'oxygène disposée dans le dos d'un pompier en intervention.

Pour vérifier que le coupleur mâle est correctement emmanché dans le coupleur femelle, il est possible d'exercer sur le coupleur mâle un effort axial allant à l'encontre des moyens de retenue et tendant à désemmancher le coupleur mâle du coupleur femelle.

Néanmoins, il n'est pas toujours facile de s'assurer que l'effort exercé est suffisant pour extraire le coupleur mâle du coupleur femelle lorsque ledit coupleur mâle n'est pas correctement emmanché dans ledit coupleur femelle.

US2015/247594A1, US10527214B2, US5445358A, US9528650B2 montrent différents dispositifs de l'état de la technique.

### OBJET DE L'INVENTION

L'invention a pour but de proposer un dispositif de couplage fluidique équipé d'un témoin d'enfoncement permettant de s'assurer, de manière simple et fiable, que le coupleur mâle est correctement emmanché dans le coupleur femelle.

### RESUME DE L'INVENTION

A cet effet, on propose un dispositif de couplage fluidique comprenant un coupleur femelle et un coupleur mâle destiné à être emmanché dans le coupleur femelle. Le coupleur femelle comprend ;
- un corps tubulaire délimitant un canal de transport de fluide qui s'étend axialement à travers le corps ;
- des moyens de retenue solidaires du corps pour assujettir de manière étanche le coupleur mâle dans le corps ;
- une bague de manoeuvre montée mobile sur le corps entre une première position axiale dans laquelle les moyens de retenue sont inactifs, et une deuxième position axiale dans laquelle les moyens de retenue sont actifs et vers laquelle la bague de manoeuvre est rappelée par un premier ressort lorsque le coupleur mâle est correctement emmanché dans le corps ;
- un capot agencé sur le corps pour masquer une portion d'extrémité de la bague de manoeuvre ; et
- un témoin d'enfoncement du coupleur mâle dans le coupleur femelle, agencé dans une gorge annulaire externe de la portion d'extrémité de la bague de manoeuvre pour être visible depuis l'extérieur du dispositif lorsque la bague de manoeuvre est dans sa première position axiale, et pour être masqué par le capot lorsque la bague de manoeuvre est dans sa deuxième position axiale.

Un tel témoin d'enfoncement permet ainsi de vérifier visuellement que le coupeur mâle est correctement emmanché dans le corps du coupleur femelle.

Selon une caractéristique particulière, le témoin d'enfoncement est un joint élastomère logé dans la gorge annulaire de la bague de manoeuvre.

De manière particulière, le joint élastomère a une couleur différente de celle de la bague de manoeuvre et/ou du capot.

De manière particulière, les moyens de retenue comportent des billes.

De manière particulière, la bague de manoeuvre est en outre montée mobile en rotation sur le corps entre une première position angulaire dans laquelle elle peut se déplacer axialement entre sa première position axiale et sa deuxième position axiale, et une deuxième position angulaire dans laquelle elle est immobilisée axialement dans sa deuxième position axiale.

Selon une autre des moyens de verrouillage de la bague de manoeuvre dans sa deuxième position angulaire.

De manière particulière, les moyens de verrouillage comprennent une tige associée à un piston monté coulissant dans un canal secondaire du corps entre une position déployée dans laquelle une extrémité libre de la tige s'étend en saillie du corps et est logée dans une rainure interne de la bague de manoeuvre, et une position rétractée dans laquelle la tige est rentrée dans le corps.

De manière particulière, le canal secondaire est en communication fluidique avec le canal de transport de fluide et un deuxième ressort rappelle le piston vers sa position rétractée.

De manière particulière, l'extrémité libre de la tige est de forme cylindrique et la rainure interne de la bague de manoeuvre est à flancs radiaux.

### BREVE DESCRIPTION DES DESSINS

L'invention sera mieux comprise à la lumière de la description qui suit, laquelle est purement illustrative et non limitative, et doit être lue en regard des figures annexées parmi lesquelles :
[Fig.1] la figure 1 est une vue en coupe axiale d'un dispositif de couplage fluidique selon un mode de réalisation particulier de l'invention ;
[Fig.2] la figure 2 est une vue analogue à la figure 1 dans laquelle le dispositif de couplage est en service ;
[Fig.3] la figure 3 est une vue en perspective du dispositif de couplage fluidique illustré à la figure 1 ;
[Fig.4] la figure 4 est une vue analogue à la figure 3 dans laquelle le dispositif de couplage est en service.

### DESCRIPTION DETAILLEE DE L'INVENTION

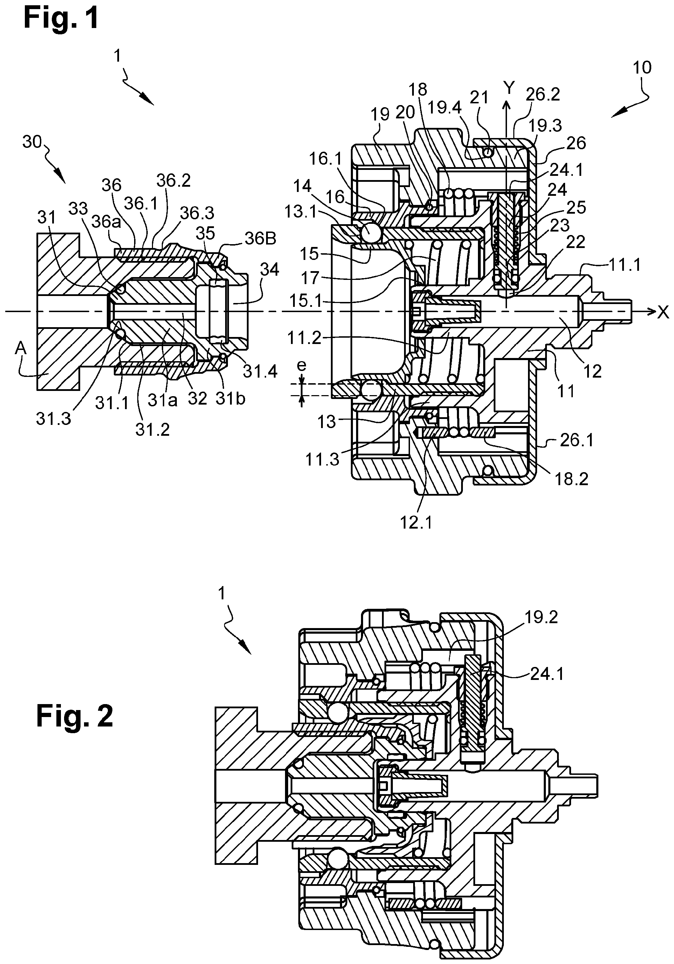

En référence à la figure 1, un dispositif de couplage fluidique selon l'invention, généralement désigné en 1, est destiné ici à permettre le raccordement d'une bouteille d'oxygène (non représentée) à un appareil respiratoire (non représenté). Le dispositif de couplage comporte un coupleur femelle 10 et un coupleur mâle 30 destiné à être emmanché dans le coupleur femelle 10 (figure 2).

Le coupleur femelle 10 comprend un corps 11 principal de forme globalement tubulaire. Le corps 11 délimite un canal 12 de transport de fluide s'étendant axialement à travers ledit corps selon un axe X.

Une première extrémité du corps 11 comprend des moyens de raccordement 11.1 d'une première extrémité du canal 12 à l'appareil de respiration. Une deuxième extrémité du corps 11, opposée à la première extrémité, comprend un embout de connexion 11.2 avec le coupleur mâle 30. L'embout de connexion 11.2 délimite une deuxième extrémité du canal 12 et est entouré coaxialement d'une jupe 11.3 de forme sensiblement cylindrique qui s'étend en saillie d'une base du corps 11. La jupe 11.3 est pourvue intérieurement d'un filetage via lequel un manchon 13 est vissé sur le corps 11.

Le manchon 13 forme avec le corps 11 un espace de réception du coupleur mâle 30 et comporte à une extrémité libre huit trous 13.1 radiaux équitablement répartis autour de l'axe X. Les trous 13.1 sont de forme sensiblement cylindrique et reçoivent chacun une bille 14 de verrouillage. Les billes 14 ont un diamètre supérieur à une épaisseur e du manchon 13 et légèrement inférieur à celui des trous 13.1 de sorte que les billes 14 ne peuvent sensiblement se déplacer que radialement, c'est-à-dire suivant une direction orthogonale à l'axe X. Comme on le verra plus loin, les billes 14 sont amenées à se déplacer entre une position de libération dans laquelle les billes sont éloignés de l'axe X (figure 1) et une position de verrouillage dans laquelle les billes sont rapprochées de l'axe X (figure 2). La position des billes 14 est définie par une douille de commande interne 15 d'une part, et par une douille de commande externe 16 d'autre part.

La douille de commande interne 15 est montée coulissante dans le manchon 13 entre une position rentrée dans laquelle les billes 14 sont libres de venir en position de verrouillage (figure 2), et une position sortie dans laquelle les billes 14 sont maintenues en position de libération et vers laquelle la douille de commande interne 15 est rappelée par un premier ressort 17 hélicoïdal (figure 1). La douille de commande interne 15 comprend en son centre un perçage 15.1 à travers lequel s'étend l'embout de connexion 11.2 délimitant le canal 12 de transport de fluide.

La douille de commande externe 16 est montée coulissante sur le manchon 13 entre une position rentrée dans laquelle les billes 14 sont libres de venir en position de libération (figure 1), et une position sortie dans laquelle les billes 14 sont maintenues en position de verrouillage et vers laquelle la douille de commande externe 16 est rappelée indirectement par un deuxième ressort 18 hélicoïdal (figure 2). En position rentrée, la douille de commande externe 16 exerce, via une surface interne de forme tronconique 16.1, un effort sur les billes 14 tendant à faire passer lesdites billes 14 de la position de libération à la position de verrouillage.

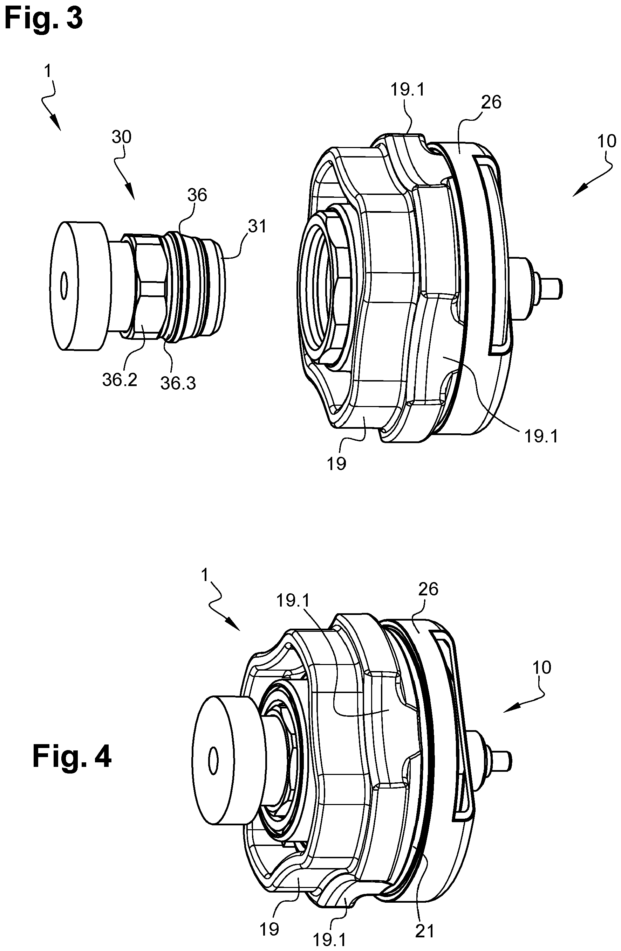

Le coupleur femelle 10 comprend également une bague de manoeuvre 19 s'étendant autour de l'axe X et entourant le corps 11 équipé du manchon 13, de la douille de commande interne 15 et de la douille de commande externe 16. La bague de manoeuvre 19 est solidarisée axialement à la douille de commande externe 16 via un anneau d'arrêt 20 et est montée mobile axialement sur le corps 11 entre une première position axiale dans laquelle la douille de commande externe 16 est en position rentrée (figures 1 et 3), et une deuxième position axiale dans laquelle la douille de commande externe 16 est en position sortie et vers laquelle la bague de manoeuvre 19 est rappelée par le deuxième ressort 18 (figures 2 et 4).

La bague de manoeuvre 19 est également montée mobile en rotation autour de l'axe X entre une première position angulaire dans laquelle elle peut se déplacer axialement entre sa première position axiale et sa deuxième position axiale (figures 1 et 3), et une deuxième position angulaire dans laquelle elle est immobilisée axialement dans sa deuxième position axiale (figures 2 et 4) et vers laquelle elle est rappelée par le deuxième ressort 18 dont une première extrémité 18.1 est fixée à la bague de manoeuvre 19 et une deuxième extrémité 18.2 au corps 11.

La bague de manoeuvre 19 comporte extérieurement des moyens de préhension permettant notamment à un opérateur de faire tourner manuellement ladite bague de manoeuvre 19 entre sa première position angulaire et sa deuxième position angulaire. Les moyens de préhension comprennent ici quatre encoches 19.1 de forme arrondie et équitablement réparties autour de l'axe X (figures 3 et 4).

Une portion d'extrémité 19.3 de la bague de manoeuvre 19 comprend une gorge annulaire 19.4 agencée sur une surface périphérique externe de ladite bague de manoeuvre 19 et dans laquelle est logé un joint élastomère 21 de couleur différente de celle de la bague de manoeuvre 19. Le joint élastomère 21 et la bague de manoeuvre 19 sont ici respectivement de couleur verte et noire.

Le corps 11 comprend également un canal 22 secondaire s'étendant selon un axe Y orthogonal à l'axe X. Le canal 22 secondaire comporte une première extrémité débouchant dans le canal 12 de transport de fluide et une deuxième extrémité débouchant à l'extérieur du corps 11. A l'intérieur du canal 22 secondaire coulisse un piston 23 soumis à la pression du fluide circulant dans le canal 12 de transport de fluide. Le piston 23 est associé à une tige 24 et est monté mobile en translation suivant l'axe Y entre une position déployée dans laquelle une extrémité libre 24.1 de la tige 24 s'étend en saillie du corps 11 et est logée dans une rainure interne 19.2 de la bague de manoeuvre 19 qui s'étend axialement pour sensiblement immobiliser ladite bague de manoeuvre 19 dans sa deuxième position angulaire (figure 2), et une position rétractée dans laquelle la tige 24 est rentrée dans le corps 11 et vers laquelle le piston 23 est rappelé par un troisième ressort 25 (figure 1).

L'extrémité libre 24.1 de la tige 24 est ici de forme cylindrique et la gorge 19.2 dans laquelle est amenée à se loger ladite extrémité libre 24.1 est à flancs radiaux, de sorte que la bague de manoeuvre 19 ne peut passer de sa deuxième position angulaire (figure 2) à sa première position angulaire (figure 1) lorsque la tige 24 est en position déployée.

Le coupleur femelle 10 comprend en outre un capot 26 comportant une base 26.1 qui s'étend dans un plan globalement orthogonal à l'axe X et qui est en contact avec sur une face latérale du corps 11, et une jupe 26.2 de forme cylindrique qui s'étend en saillie axiale depuis la base 26.1 et qui masque une portion d'extrémité 19.3 de la bague de manoeuvre 19. La base 26.1 comprend en son centre un perçage à travers lequel s'étendent les moyens de raccordement 11.1 du canal 12 à l'appareil de respiration. La jupe 26.2 est agencée pour masquer la portion d'extrémité 19.3 de la bague de manoeuvre 19 de manière à ce que le joint élastomère 21 soit invisible depuis l'extérieur du dispositif de couplage 1 lorsque la bague de manoeuvre 19 est dans sa première position axiale (figures 1 et 3), et à ce que le joint élastomère 21 soit visible depuis l'extérieur du coupleur femelle 10 lorsque la bague de manoeuvre 19 est dans sa deuxième position axiale (figures 2 et 4).

Le coupleur mâle 30 comprend un insert 31 de forme globalement tubulaire dont une première portion 31a est logée dans un orifice de sortie d'un robinet A pour bouteille d'oxygène, et dont une deuxième portion 31b s'étend en saillie axiale dudit orifice de sortie du robinet A.

La première portion 31a de l'insert 31 délimite un canal de transport de fluide 32 s'étendant axialement à travers ladite première portion 31a. Une extrémité libre de la première portion 31a comprend extérieurement une surface tronconique 31.1 dont la grande base est reliée à une surface cylindrique 31.2 de ladite première portion 31a. La surface tronconique 31.1 coopère avec une fraisure de l'orifice de sortie du robinet A et délimite une gorge annulaire 31.3 externe dans laquelle est reçu un joint d'étanchéité 33 pour assurer une étanchéité entre l'insert 31 et ledit orifice de sortie du robinet A.

La deuxième portion 31b de l'insert 31 délimite un canal de réception 34 de l'embout de connexion 11.2 du coupleur femelle 10. Le canal de réception 34 s'étend axialement dans la deuxième portion 31b et débouche dans le canal de transport de fluide 32. La deuxième portion 31b comprend une gorge annulaire 31.4 interne dans laquelle est reçu un élément d'étanchéité 35 destiné à assurer une étanchéité entre l'insert 31 et l'embout de connexion 11.2 du coupleur femelle 10.

Le coupleur mâle 30 comprend également un manchon de verrouillage 36 comportant une première portion 36a et une deuxième portion 36b s'étendant respectivement en regard de la première portion 31a et de la deuxième portion 31b de l'insert 31. Une extrémité libre de la première portion 36a du manchon de verrouillage 36 comprend un filetage interne 36.1 coopérant avec un filetage externe de la sortie du robinet A, et une empreinte externe de forme hexagonale 36.2 formant des surfaces de préhension pour le vissage du manchon de verrouillage 36 sur la sortie de robinet A. La première portion 36a du manchon de verrouillage 36 comprend également une gorge annulaire 36.3 externe délimitant axialement l'empreinte hexagonale 36.2 et dans lesquelles sont destinées à venir se loger les billes 14 de verrouillage du coupleur femelle 10. La deuxième portion 36b du manchon de verrouillage comprend un épaulement interne coopérant avec un épaulement externe de la deuxième portion 31b de l'insert 31 pour immobiliser axialement ledit insert 31 dans l'orifice de sortie du robinet A après le vissage du manchon de verrouillage 36 sur ladite sortie de robinet A.

Le fonctionnement du dispositif de couplage 1 va maintenant être détaillé.

Pour effectuer la connexion entre la bouteille d'oxygène et l'appareil de respiration, l'opérateur tient le coupleur femelle par la bague de manoeuvre 19 et emmanche le coupleur mâle 30 suivant l'axe X dans le coupleur femelle 10 jusqu'à ce qu'une extrémité libre de l'insert 31 vienne en butée contre une surface transversale de la douille de commande interne 15.

En poursuivant l'emmanchement du coupleur mâle 30 dans le coupleur femelle 10, l'embout de connexion 11.2 coopère avec l'insert 31 tandis que la douille de commande interne 15 passe de la position sortie à la position rentrée, ce qui a pour effet de comprimer le premier ressort 17 de rappel et de déplacer la douille de commande externe 16 de la position rentrée à la position sortie (figure 2) et d'amener les billes 14 de la position de libération à la position de verrouillage sous l'action jumelée de la surface tronconique 16.1 de la douille de commande externe 16 et du deuxième ressort 18 de rappel. En effet, lorsque le coupleur mâle est en butée contre la douille de commande interne 15 en position rentrée, la gorge annulaire 36.3 est en regard des billes 14 qui peuvent saillir dans ladite gorge annulaire 36.3. Ceci entraîne également le passage de la bague de manoeuvre 19 de sa première position axiale à sa deuxième position axiale, puis de sa première position angulaire à sa deuxième position angulaire. Le joint élastomère 21 devient alors visible depuis l'extérieur du dispositif de couplage 1 en n'étant plus masqué par le capot 26.

En position sortie, la douille de commande externe 16 bloque les billes dans leur position de verrouillage, ce qui a pour effet d'empêcher le retrait du coupleur mâle 30 tout en assurant une communication fluidique étanche entre ledit coupleur mâle 30 et le coupleur femelle 10 via les canaux de transport de fluide 12, 32.

Lorsque le circuit de fluide est sous pression, la circulation du fluide sous pression à l'intérieur du canal de transport de fluide 12 entraîne le passage de la tige 24 associée au piston 23 de la position rétractée à la position déployée, ce qui a pour effet de comprimer le troisième ressort 25 de rappel et d'empêcher la bague de manoeuvre 19 de passer de sa deuxième position angulaire à sa première position angulaire, et donc de sa deuxième position axiale à sa première position axiale.

Lorsque le canal de transport de fluide 12 n'est plus soumis à la circulation du fluide sous pression, le troisième ressort 25 rappelle la tige 24 en position rétractée, ce qui autorise le passage de la bague de manoeuvre 19 de sa deuxième position angulaire à sa première position angulaire, et donc de sa deuxième position axiale à sa première position axiale.

Pour effectuer la déconnexion de la bouteille d'oxygène de l'appareil de respiration, une rotation de la bague de manoeuvre 19 autour de l'axe X permet, à l'encontre du deuxième ressort 18, de faire passer ladite bague de manoeuvre 19 de sa deuxième position angulaire à sa première position angulaire, puis ladite bague de manoeuvre 19 est amenée, toujours à l'encontre du deuxième ressort 18, de sa deuxième position axiale à sa première position axiale.

En rejoignant sa première position axiale, la bague de manoeuvre 19 entraîne le passage de la douille de commande externe 16 de la position sortie à la position rentrée, et permet aux billes 14 de passer de la position de verrouillage à la position de libération sous l'action du premier ressort 17 qui, en rappelant la douille de commande interne 15 en position sortie, tend à repousser le coupleur mâle 30 et à ramener les billes 14 en position de libération. Le coupleur mâle est alors déconnecté du coupleur femelle 10.

On notera qu'en rejoignant leur position de libération, les billes 14 coopèrent de nouveau avec la surface tronconique 16.1 de la douille de commande externe 16 et maintiennent, avec la douille de commande interne 15, la bague de manoeuvre 19 dans sa première position axiale.

On comprendra que :
- les billes 14 forment des moyens de retenue du coupleur mâle 30 dans le coupleur femelle 10 ;
- le piston 23 et la tige 24 forment des moyens de verrouillage de la bague de manoeuvre 19 dans sa deuxième position angulaire et permet d'interdire toute déconnexion du dispositif de couplage 1 lorsqu'un fluide sous pression circule dans ledit dispositif de couplage 1 ; et
- le joint élastomère 21 forme un témoin d'enfoncement du coupleur mâle 30 dans le coupleur femelle 10 et permet de s'assurer de la bonne connexion du coupleur mâle 30 dans le coupleur femelle 10.

Pour faciliter la détection de la bonne connexion du coupleur mâle 30 dans le coupleur femelle 10, la couleur du joint élastomère 21 sera choisie de manière à contraster le plus fortement possible avec celle de la bague de manoeuvre 19 et/ou du capot 26.

Bien entendu, l'invention n'est pas limitée au mode de réalisation décrit mais englobe toute variante entrant dans le champ de l'invention telle que définie par les revendications.

Le joint élastomère 21 peut être remplacé par tout moyen permettant de témoigner visuellement de la bonne connexion du coupleur mâle 30 dans le coupleur femelle 10 : bague, peinture, impression laser...

Le nombre de tige/piston 23, 24 permettant de bloquer la bague de manoeuvre 19 dans sa deuxième position axiale pourra être supérieure ou égale à deux.

Le nombre de billes 14 pourra être inférieur ou supérieur à huit.

## Revendications

1. Dispositif (1) de couplage fluidique comprenant un coupleur femelle (10) et un coupleur mâle (30) destiné à être emmanché dans le coupleur femelle, le coupleur femelle comprenant :
- un corps tubulaire (11) délimitant un canal de transport de fluide (12) qui s'étend axialement à travers le corps ;
- des moyens de retenue (14) solidaires du corps pour assujettir de manière étanche le coupleur mâle dans le corps ;
- une bague de manoeuvre (19) montée mobile sur le corps entre une première position axiale dans laquelle les moyens de retenue sont inactifs, et une deuxième position axiale dans laquelle les moyens de retenue sont actifs et vers laquelle la bague de manoeuvre est rappelée par un premier ressort (18) lorsque le coupleur mâle est correctement emmanché dans le corps ; **caractérisé par**
- un capot (26) agencé sur le corps pour masquer une portion d'extrémité (19.3) de la bague de manoeuvre ; et
- un témoin d'enfoncement (21) du coupleur mâle dans le coupleur femelle, agencé dans une gorge annulaire externe (19.4) de la portion d'extrémité de la bague de manoeuvre pour être visible depuis l'extérieur du dispositif lorsque la bague de manoeuvre est dans sa première position axiale, et pour être masqué par le capot lorsque la bague de manoeuvre est dans sa deuxième position axiale.

2. Dispositif (1) selon la revendication 1 dans lequel le témoin d'enfoncement est un joint élastomère (21) logé dans la gorge annulaire de la bague de manoeuvre.

3. Dispositif (1) selon la revendication 2 dans lequel le joint élastomère (21) a une couleur différente de celle de la bague de manoeuvre (19) et/ou du capot (26).

4. Dispositif (1) selon l'une quelconque des revendications précédentes, dans lequel les moyens de retenue comportent des billes (14).

5. Dispositif (1) selon l'une quelconque des revendications précédentes, dans lequel la bague de manoeuvre (19) est en outre montée mobile en rotation sur le corps (11) entre une première position angulaire dans laquelle elle peut se déplacer axialement entre sa première position axiale et sa deuxième position axiale, et une deuxième position angulaire dans laquelle elle est immobilisée axialement dans sa deuxième position axiale.

6. Dispositif (1) selon la revendication 5, comprenant des moyens de verrouillage (23, 24) de la bague de manoeuvre dans sa deuxième position angulaire.

7. Dispositif (1) selon la revendication 6, dans lequel les moyens de verrouillage comprennent une tige (24) associée à un piston (23) monté coulissant dans un canal secondaire (22) du corps entre une position déployée dans laquelle une extrémité libre (24.1) de la tige s'étend en saillie du corps (11) et est logée dans une rainure interne (19.2) de la bague de manoeuvre (19), et une position rétractée dans laquelle la tige est rentrée dans le corps.

8. Dispositif (1) selon la revendication 7, dans lequel le canal secondaire (22) est en communication fluidique avec le canal de transport de fluide (12) et un deuxième ressort (25) rappelle le piston (23) vers sa position rétractée.

9. Dispositif (1) selon la revendication 7 ou 8, dans lequel l'extrémité libre (24.1) de la tige (24) est de forme cylindrique et la rainure interne (19.2) de la bague de manoeuvre est à flancs radiaux.

## Patentansprüche

1. Fluidkupplungsvorrichtung (1), umfassend eine weibliche Kupplung (10) und eine männliche Kupplung (30), die dazu bestimmt ist, in die weibliche Kupplung eingesetzt zu werden, wobei die weibliche Kupplung umfasst:
- einen rohrförmigen Körper (11), der einen Fluidtransportkanal (12) begrenzt, der sich axial durch den Körper erstreckt;
- Haltemittel (14), die fest mit dem Körper verbunden sind, um die männliche Kupplung auf dichte Weise in dem Körper zu befestigen;
- einen Manövrierring (19), der auf dem Körper beweglich zwischen einer ersten axialen Position, in der die Haltemittel inaktiv sind, und einer zweiten axialen Position gelagert ist, in der die Haltemittel aktiv sind und in die der Manövrierring von einer ersten Feder (18) rückgestellt wird, wenn die männliche Kupplung korrekt in den Körper eingesetzt ist; **gekennzeichnet durch**:
- eine Kappe (26), die auf dem Körper angeordnet ist, um einen Endabschnitt (19.3) des Manövrierrings abzudecken; und
- eine Versenkungsanzeige (21) zum Anzeigen des Versenkens der männlichen Kupplung in der weiblichen Kupplung, die in einer äußeren ringförmigen Nut (19.4) des Endabschnitts des Manövrierrings angeordnet ist, um von außerhalb der Vorrichtung sichtbar zu sein, wenn der Manövrierring in seiner ersten axialen Position ist, und um von der Kappe abgedeckt zu sein, wenn der Manövrierring in seiner zweiten axialen Position ist.

2. Vorrichtung (1) nach Anspruch 1, bei der die Versenkungsanzeige eine Elastomerdichtung (21) ist, die in der ringförmigen Nut des Manövrierrings untergebracht ist.

3. Vorrichtung (1) nach Anspruch 2, bei der die Elastomerdichtung (21) eine Farbe hat, die sich von der des Manövrierrings (19) und/oder der Kappe (26) unterscheidet.

4. Vorrichtung (1) nach einem der vorhergehenden Ansprüche, bei der die Haltemittel Kugeln (14) umfassen.

5. Vorrichtung (1) nach einem der vorhergehenden Ansprüche, bei der der Manövrierring (19) ferner auf dem Körper (11) zwischen einer ersten Winkelposition, in der er sich axial zwischen seiner ersten axialen Position und seiner zweiten axialen Position verschieben kann, und einer zweiten Winkelposition rotationsbeweglich gelagert ist, in der er axial in seiner zweiten axialen Position blockiert ist.

6. Vorrichtung (1) nach Anspruch 5, die Verriegelungsmittel (23, 24) zum Verriegeln des Manövrierrings in seiner zweiten Winkelposition umfasst.

7. Vorrichtung (1) nach Anspruch 6, bei der die Verriegelungsmittel eine Stange (24) umfassen, die mit einem Kolben (23) verbunden ist, der in einem sekundären Kanal (22) des Körpers verschiebbar zwischen einer ausgefahrenen Position, in der ein freies Ende (24.1) der Stange aus dem Körper (11) vorsteht und in einer Innennut (19.2) des Manövrierrings (19) untergebracht ist, und einer eingefahrenen Position gelagert ist, in der die Stange in den Körper zurückgezogen ist.

8. Vorrichtung (1) nach Anspruch 7, bei der der sekundäre Kanal (22) in Fluidkommunikation mit dem Fluidtransportkanal (12) ist und eine zweite Feder (25) den Kolben (23) in seine eingefahrene Position rückstellt.

9. Vorrichtung (1) nach Anspruch 7 oder 8, bei der das freie Ende (24.1) der Stange (24) zylinderförmig ist und die Innennut (19.2) des Manövrierrings radiale Flanken hat.

## Claims

1. Fluid coupling device (1) comprising a female coupler (10) and a male coupler (30) intended to be fitted in the female coupler, the female coupler comprising:
a tubular body (11) delimiting a fluid transport channel (12) which extends axially through the body;
retaining means (14) integral with the body to secure, in a sealed manner, the male coupler in the body;
an actuating ring (19) movably mounted on the body between a first axial position, in which the retaining means are inactive, and a second axial position, in which the retaining means are active and towards which the actuating ring is returned by a first spring (18) when the male coupler is correctly fitted in the body; **characterized by**
a cap (26) arranged on the body to conceal an end portion (19.3) of the actuating ring; and
an sinking control (21) of the male coupler in the female coupler, arranged in an external annular groove (19.4) of the end portion of the actuating ring to be visible from the outside of the device when the actuating ring is in its first axial position, and to be concealed by the cap when the actuating ring is in its second axial position.

2. Device (1) according to claim 1, wherein the sinking control is an elastomer seal (21) housed in the annular groove of the actuating ring.

3. Device (1) according to claim 2, wherein the elastomer seal (21) has a colour different from that of the actuating ring (19) and/or of the cap (26).

4. Device (1) according to any one of the preceding claims, wherein the retaining means comprise balls (14).

5. Device (1) according to any one of the preceding claims, wherein the actuating ring (19) is further movably rotatably mounted on the body (11) between a first angular position in which it can be axially moved between its first axial position and its second axial position, and a second angular position wherein it is axially immobilised in its second axial position.

6. Device (1) according to claim 5, comprising means for locking (23, 24) the actuating ring in its second angular position.

7. Device (1) according to claim 6, wherein the locking means comprise a rod (24) associated with a piston (23) slidingly mounted in a secondary channel (22) of the body between a deployed position in which a free end (24.1) of the rod extends projecting from the body (11) and is housed in an internal notch (19.2) of the actuating ring (19), and a retracted position in which the rod is returned in the body.

8. Device (1) according to claim 7, wherein the secondary channel (22) is in fluid communication with the fluid transport channel (12) and a second spring (25) returns the piston (23) to its retracted position.

9. Device (1) according to claim 7 or 8, wherein the free end (24.1) of the rod (24) is cylindrically shaped and the internal notch (19.2) of the actuating ring has radial sides.
